# EUROPÄISCHE PATENTSCHRIFT

(11) **EP 3 087 460 B1**
(45) Veröffentlichungstag und Bekanntmachung des Hinweises auf die Patenterteilung: **21.11.2018**
(21) Anmeldenummer: 14824459.3
(22) Anmeldetag: 19.12.2014
(51) Int. Cl.: G06F 3/041, B60K 37/00

(54) **VERFAHREN, VORRICHTUNG UND SYSTEM ZUR KOMMUNIKATION MIT EINEM SENSOR**
MEHTOD, DEVICE AND SYSTEM FOR COMMUNICATION WITH A SENSOR
PROCÉDÉ, DISPOSITIF ET SYSTÈME POUR UNE COMMUNICATION AVEC UN CAPTEUR

(30) Priorität: 23.12.2013 DE 102013114820
(43) Veröffentlichungstag der Anmeldung: 02.11.2016
(73) Patentinhaber: INOVA Semiconductors GmbH, 81671 München (DE)
(72) Erfinder: RIEDEL, Michael, 84428 Buchbach (DE)
(74) Vertreter: Reich, Jochen
(86) Internationale Anmeldenummer: PCT/EP2014/078681
(87) Internationale Veröffentlichungsnummer: WO 2015/097080

(56) Entgegenhaltungen:
- DE-A1-102008 061 712
- MARKUS RÖMER: "APIX Industrial - Standard connectivity for industrial display applications White Paper", INOVA WHITE PATER, 1. Oktober 2009 (2009-10-01), XP055174932,

## Beschreibung

Die Erfindung betrifft ein Verfahren, eine Vorrichtung und ein System zur Kommunikation mit einem Sensor. Alternativ oder zusätzlich betrifft die Erfindung ein Verfahren, eine Vorrichtung und ein System zur Steuerung eines Sensors, insbesondere einer berührungsempfindlichen Eingabevorrichtung, beispielsweise in Form eines berührungsempfindlichen Bildschirms, das heißt eines sogenannten "Touch Screens".

DE 10 2008 061 712 A1 zeigt ein Verfahren zur Übertragung von Daten in einem Fahrzeug über eine digitale Schnittstelle, bei dem die Daten Audiosignale umfassen, wobei die Audiosignale logisch getrennt von anderen Signalen über die digitale Schnittstelle übertragen werden.

MARKUS RÖMER: "APIX Industrial - Standard connectivity for industrial display applications White Paper", INOVA WHITE PATER, 1. Oktober 2009 (2009-10-01), XPO55174932, zeigt eine Datenverbindung zum Einsatz in einem Automobil.

Der Sensor kann z.B. als kapazitive Eingabeeinrichtung wie etwa als berührungsempfindliche Eingabevorrichtung, beispielsweise in Form eines berührungsempfindlichen Bildschirms, das heißt eines sogenannten "Touch Screens", und / oder auch als Ein- und Ausgabevorrichtung ausgebildet sein, die ein Anzeigefeld und eine Tastatur, zum Beispiel in Form von auf einem Bildschirm dargestellten, mittels einer Maus oder eines Cursors oder durch direkte Berührung betätigbaren Tastatur, aufweisen.

Zur Steuerung und/oder Abfrage des Sensors, beispielsweise der kapazitiven Eingabeeinrichtung oder des berührungsempfindlichen Bildschirms, kann eine Steuereinrichtung vorhanden sein, die mit dem Sensor in Kommunikationsverbindung steht.

Bei größerer Entfernung zwischen der Steuereinrichtung und dem Sensor, das heißt der Ein-/Ausgabevorrichtung, und der Steuereinrichtung sind entsprechende Verbindungen erforderlich, die drahtgebunden oder drahtlos ausgeführt sein können und gegebenenfalls größere Datenmengen übertragen können oder müssen. Hierbei können allerdings Latenzen, also Signalverzögerungen, oder Signalverfälschungen auftreten, die die Zuverlässigkeit der Steuerung beeinträchtigen können.

Mit der Erfindung soll die Genauigkeit, z.B. über geringe Latenzzeiten oder Verzögerungszeiten, und die Fehlerfreiheit der Kommunikation zwischen einem Sensor und einer entfernt hiervon angeordneten Steuereinrichtung verbessert werden.

Mit der Erfindung werden eine Vorrichtung gemäß dem unabhängigen Vorrichtungsanspruch 1 sowie ein Verfahren gemäß dem unabhängigen Verfahrensanspruch 7 geschaffen. Vorteilhafte Ausgestaltungen der Erfindung sind in den Unteransprüchen eingegeben.

Gemäß einem Aspekt der Erfindung ist eine Vorrichtung zur Kommunikation mit einem Sensor, insbesondere in Form einer berührungsempfindlichen Ein- und/oder Ausgabevorrichtung, z. B. eines Touch Screens, vorgesehen, mit einer Steuervorrichtung, die über einen entfernt angeordneten Controller steuerbar ist. Hierbei ist in einem Empfänger-Baustein ein Funktionsblock vorgesehen, der eine Signalisierung zur Kommunikation mit der Steuervorrichtung ausführt. Der Empfänger-Baustein ist über eine Kommunikationsleitung mit einem Sender-Baustein verbunden oder verbindbar.

Auch der Sender-Baustein kann einen Funktionsblock aufweisen, der als Sensor-Schnittstelle für den Controller ausgebildet ist und zur Kommunikation mit dem Funktionsblock des Empfänger-Bausteins über die Verbindungsleitung ausgelegt ist. Die Vorrichtung kann vorzugsweise für den Einsatz in einem Kraftfahrzeug ausgelegt sein. Dabei kann die Verbindungsleitung als Koaxialkabel, einadriges Kabel, zweiadriges Kabel, allgemein mehradriges Kabel, beispielsweise vieradriges Kabel, oder optische Verbindungsstrecke ausgebildet sein, das bzw. die eine ungestörte, optional abhörsichere Übertragung erlaubt.

Sowohl die Steuervorrichtung als auch der Empfänger-Baustein können über zwei Kommunikationspfade verbunden sein, von denen der eine zur Datenübertragung und der andere zur Signalisierung zwischen der Steuervorrichtung und dem Funktionsblock dient.

Die Vorrichtung kann dazu ausgelegt sein, in einer ersten Phase eine Initialisierung zwischen der Steuervorrichtung und dem Controller durchzuführen. In einer zweiten Phase kann die eigentliche Datenübertragung zwischen dem Sensor und dem Controller erfolgen.

Der Funktionsblock des Sender-Bausteins kann z.B. als Sensor-Schnittstelle für den Controller konfiguriert sein. Der Funktionsblock des Empfänger-Bausteins kann hierbei oder alternativ als Schnittstelle, insbesondere Controller-Schnittstelle, für die Steuervorrichtung ausgebildet sein.

Der Funktionsblock kann z.B. die Signalisierung zur Kommunikation mit der Steuervorrichtung ausführen, so dass über die vorzugsweise als serielle Datenleitung ausgebildete Verbindungsleitung lediglich die für den Controller (Steuervorrichtung) erforderlichen Nutzdaten zu übertragen sind.

Gemäß einem weiteren Aspekt der Erfindung wird ein System zur Verwendung in einem Kraftfahrzeug für die Anzeigesteuerung mindestens eines im Kraftfahrzeug vorhandenen Displays bereitgestellt, das eine Vorrichtung gemäß einem den obigen Ausführungen enthält.

Gemäß einem weiteren Aspekt der Erfindung wird ein Verfahren zur Kommunikation mit einem Sensor, insbesondere in Form einer berührungsempfindlichen Ein- und/oder Ausgabevorrichtung, z. B. eines Touch Screens, bereitgestellt, wobei eine Steuervorrichtung über einen entfernt angeordneten Controller (Steuervorrichtung) gesteuert wird, und ein Empfänger-Baustein, der über eine Kommunikationsleitung mit einem Sender-Baustein verbunden ist, über einen Funktionsblock eine Signalisierung zur Kommunikation mit der Steuervorrichtung ausführt.

Bei diesem Verfahren kann der erste Funktionsblock aus Sicht der Sensor-Steuervorrichtung (10) als Proxy des entfernt angeordneten, einen Kommunikations-Endpunkts bildenden Controllers (1) dienen. Wenn der Sensor Daten hat, die von dem Host Controller gelesen und interpretiert werden sollen, kann der erste Funktionsblock z.B. die Daten bei dem Sensor abholen und diese an einen zweiten Funktionsblock im Sender-Baustein senden. Umgekehrt kann der erste Funktionsblock dann, wenn der erste Funktionsblock Daten von dem zweiten Funktionsblock erhält, die an die Steuervorrichtung übergeben oder von der Steuervorrichtung gelesen werden sollen, wie ein Host Controller in Aktion treten, diese Aufträge erledigen und gegebenenfalls Daten als Antwort an den zweiten Funktionsblock zurücksenden. Der zweite Funktionsblock kann sich also aus Sicht des Controller 1 wie ein Proxy in seiner Kommunikation mit der Sensor-Steuervorrichtung verhalten.

Bei diesem Verfahren kann beispielsweise dann, wenn der Sensor Daten hat, die von dem Controller gelesen und interpretiert werden sollen, eine Aufforderung an den ersten Funktionsblock im Empfänger-Baustein gesendet werden. Alternativ kann der erste Funktionsblock die Steuervorrichtung des Sensors periodisch auf verfügbare Daten testen (polling).

Bei diesem Verfahren kann in einer ersten Phase eine Initialisierung zwischen der Steuervorrichtung und dem Controller durchgeführt werden, und in einer zweiten Phase die eigentliche Datenübertragung zwischen dem Sensor und dem Controller ausgeführt werden.

Die Erfindung betrifft auch ein Computerprogramm oder Computerprogrammprodukt, das Anweisungen enthält, die bei ihrer Ausführung auf einem Computer oder Prozessor diesen zur Durchführung des angegebenen Verfahrens veranlassen.

Die Erfindung wird nachstehend anhand eines Ausführungsbeispiels unter Bezugnahme auf die Zeichnungen näher beschrieben.

In Fig. 1 ist ein Ausführungsbeispiel der erfindungsgemäßen Vorrichtung dargestellt.

Fig. 2 zeigt eine Ausführungsform eines erfindungsgemäßen Verfahrens.

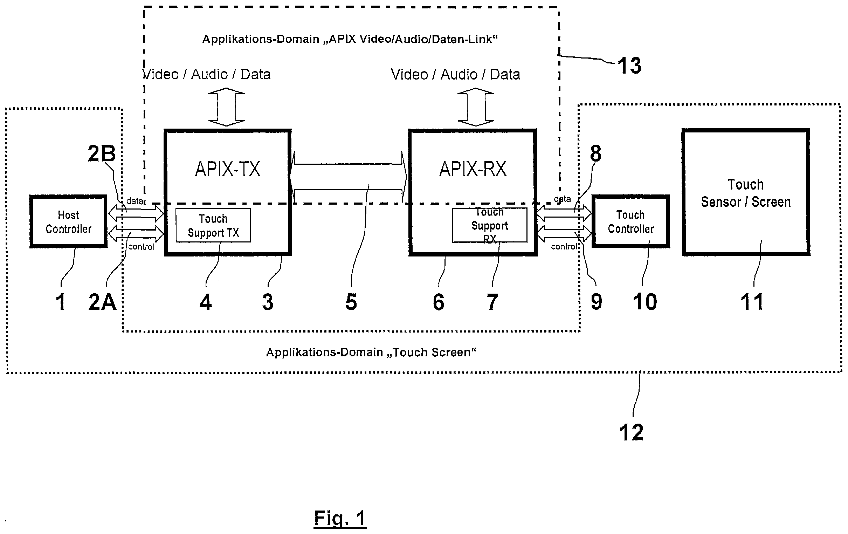

Bei dem in Fig. 1 gezeigten Ausführungsbeispiel der erfindungsgemäßen Vorrichtung ist eine Steuervorrichtung 1, beispielsweise in Form eines Mikroprozessors oder Mikrocontrollers, vorhanden, die über eine Kommunikationsverbindung 2A, 2B mit einem beispielsweise als Sendebaustein ausgebildeten Baustein 3 in Verbindung steht. Die Kommunikationsverbindung 2A dient bei diesem Ausführungsbeispiel zur Übertragung von Steuerdaten (control), wohingegen über die Kommunikationsverbindung 2B bei diesem Ausführungsbeispiel Nutzdaten (data) übertragen werden. Der Baustein 3, der beispielsweise als Baustein für den Einsatz im Automobilbereich oder in Kraftfahrzeugen für die Datenübertragung von Nutzdaten wie etwa von visuellen Daten (Bilddaten) und / oder akustischen Daten und / oder Steuerdaten ausgelegt sein kann (Automotive Pixel Transmitter, *APIX-TX*), weist optional einen Funktionsblock 4 in Form einer Unterstützungsfunktion für einen beispielsweise als berührungsempfindlichen Bildschirm (Touch Screen) 11 ausgebildeten Sensor auf.

Ein weiterer elektronischer Baustein 6, der beispielsweise als Baustein für den Einsatz im Automobilbereich oder in Kraftfahrzeugen für den Datenempfang wie etwa von visuellen Daten (Bilddaten) und / oder akustischen Daten oder allgemein als Empfänger (Automotive Pixel Receiver, *APIX-RX*) ausgebildet sein kann, weist einen Funktionsblock 7 in Form einer Unterstützungsfunktion für die Unterstützung des Sensors, d.h. des berührungsempfindlichen Bildschirms 11 auf. Der Funktionsblock 7, d.h. die Unterstützungseinrichtung, kann als Programm oder Funktion in Softwareausführung ausgelegt sein kann und als "Touch Support" bezeichnet werden. Eine Verbindung 5 stellt einen Link für die Verbindung zwischen den beiden Bausteinen 3, 6 dar, und kann beispielsweise als Signalleitung, beispielsweise als vier- oder mehradrige Leitung, ausgebildet sein, die direkt an die Bausteine 3 und 6 angeschlossen ist und diese miteinander verbindet. Alternativ kann die Verbindung 5 auch als Koaxialkabel, als ein- oder mehradriges Kabel, als optische Übertragungsstrecke, Optokoppler, Funkstrecke und / oder in sonstiger Weise ausgebildet sein.

Eine Steuereinrichtung 10 steht mit der Unterstützungseinrichtung 7 über Verbindungen 8, 9 in Verbindung, wobei beispielsweise über die Verbindung 8 lediglich Daten von und zu dem Sensor 11 geleitet werden, wohingegen die Verbindung 9 für die Übertragung von Protokollworten und Protokolldaten, beispielsweise für die Signalisierung, ausgelegt ist. Die Steuereinrichtung 10 ist in Fig. 1 separat vom Sensor 11 dargestellt, kann jedoch auch in diesem integriert sein und steht zur Steuerung des Sensors 11 in unmittelbarer Verbindung mit diesem.

Die im Baustein 6, beispielsweise dem Empfänger, implementierte Unterstützungseinrichtung 7 bildet bei diesem Ausführungsbeispiel die Schnittstelle zu der Steuerlogik 10 des als Touch Screen ausgebildeten Sensors 11. Die Funktion 7 übernimmt die Signalisierung zu der Steuereinrichtung (Steuerlogik, Touch Ctrl) 10 des berührungsempfindlichen Bildschirms (Touch Screens) 11. Die Funktion 7 stellt die Signalisierung z. B. über ein entsprechendes Protokoll, zur Kommunikation mit der Steuereinrichtung 10 bereit. Über die Verbindung 5, das heißt, den entsprechenden Link, müssen nur die für den Mikrocontroller 1 wichtigen Daten übertragen werden.

Bei dem in Fig. 1 gezeigten Ausführungsbeispiel transportiert ein Host System, d.h. eine Applikationsdomain 13, in Form eines "APIX" oder "APIX Video/Audio/Daten-Links", Daten einer weiteren Applikationsdomain 12, nämlich der Applikations-Domain "Touch Screen".

Das in Fig. 1 gezeigte Ausführungsbeispiel zeichnet sich unter anderem durch die Vorteile niedriger Latenzzeit bei der Kommunikation sowie bei der Signalisierung, also mittels des Touch Protokolls, aus, da lediglich eine lokale Kommunikation zwischen dem Funktionsblock 7 und der Steuereinrichtung 10 einerseits, bzw. zwischen dem Funktionsblock 4 und der Mikrocontroller 1 andererseits, notwendig ist und folglich hierfür keine Kommunikation über die Verbindung 5 erforderlich ist. Diese Konfiguration, bei der über die Verbindung 5 keine Signalisierung zwischen den Komponenten 1 und 10 übertragen werden muss, spart zudem Bandbreite ein, da die auf der Verbindung 5 übertragene Datenmenge entsprechend reduziert ist. Des weiteren wird hierdurch zugleich auch die Fehleranfälligkeit verringert, da lediglich sehr kurze Verbindungswege zwischen dem Funktionsblock (Unterstützungseinrichtung) 7 und der Steuereinrichtung 10 ausreichend sind. Ein weiterer Vorteil besteht darin, dass auch unterschiedliche Controller bei einheitlichem Datenformat unterstützt werden können.

Das in Fig. 1 gezeigte System kann bei einer Ausführungsform als Controller-Sensor-System ausgebildet sein, bei dem der Controller, also der Mikrocontroller 1 als Master und der Sensor 11 als Slave der Kommunikationsbeziehungen zwischen diesen beiden Komponenten fungieren kann. Hierbei kann in einem solchen System der Slave, also der Sensor 11, optional die Möglichkeit haben, dem Master, also dem Mikrocontroller 1 mitzuteilen, dass eine Kommunikation erforderlich ist.

Allgemein kann eine solche Datenkommunikation in etlichen Fällen zwei qualitativ unterscheidbare Phasen (1), (2) aufweisen.

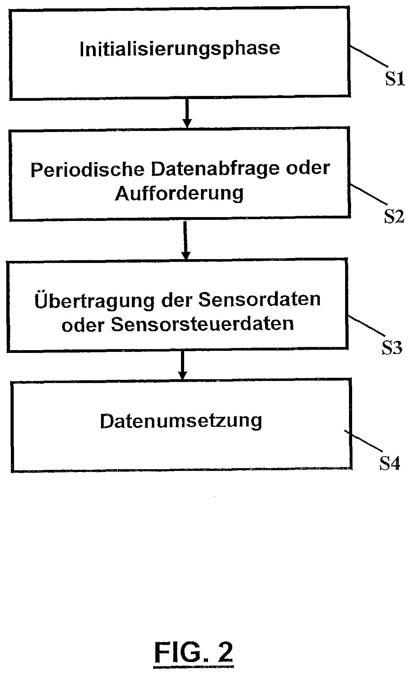

In der ersten Phase (1) liest und schreibt der Mikrocontroller 1 (Master) innerhalb eines einmaligen, begrenzten Zeitintervalls Daten vom oder zum Sensor 11, um beispielsweise den Sensor 11 zu konfigurieren und auf die gewünschte Arbeitsweise einzustellen. Diese Phase (1) kann beispielsweise als Initialisierungsphase nach einer Rücksetzung (Reset) des Systems oder nach dem Anlegen der Versorgungsspannung durchgeführt werden. Dies ist in Fig. 2 in einem Schritt S1 veranschaulicht.

In der Phase (2) liest der Mikrocontroller 1 (Master) periodisch Daten vom Sensor 11 oder wird alternativ vom Sensor 11 periodisch zum Lesen der Daten aufgefordert. Dieser Datenlesevorgang oder Datenübertragungsaufforderungsvorgang läuft in der Regel in exakt der gleichen Art und Weise bezüglich der logischen und physikalischen Bitstrukturen ab, beispielsweise hinsichtlich Adresse und Anzahl der Daten. Diese Phase (2) stellt üblicherweise die normale Betriebsart und Funktion des Controller-Sensor-Systems nach einer Initialisierung, das heißt nach der Phase (1), dar. Dies ist in Fig. 2 in Schritten S2, S3 veranschaulicht.

Die Kommunikation zwischen der Steuervorrichtung 1 (z. B. dem Controller oder Mikrocontroller) und dem Sensor 11 erfolgt bei dem Ausführungsbeispiel physikalisch über eine Verbindung, die als Peripherie-Bus ausgebildet sein kann, der in der Regel nur geeignet ist, kurze Entfernungen auf einer Platine oder wenige Meter Kabel zu überbrücken. Bei einem oder mehreren Ausführungsbeispielen können hierfür ein UART, I²C oder ein SPI-Bus eingesetzt sein. Die Kommunikationsdaten werden somit von der Apix Application sozusagen Huckepack getragen.

Bei einem oder mehreren Ausführungsbeispielen können die Steuervorrichtung 1 und der Sensor 11 deutlich voneinander getrennt sein, wobei andere Übertragungstechnologien benutzt werden können und/oder ein bestehender Übertragungskanal wie etwa der Link 5, auf dem bereits andere Daten gemäß eines Protokolls transportiert werden, auch für solche Daten zur Steuerung des Sensors 11 oder Übertragung der Sensordaten genutzt werden können. Diese Daten können beispielsweise durch entsprechende Signalisierung oder Protokolle in einen bereits bestehenden Datenverkehr eingebettet werden, so dass keine zusätzlichen, exklusiv durch die Steuervorrichtung (Controller) 1 und den Sensor 11 genutzten Verbindungskabel zwischen dem Sender und dem Empfänger notwendig sind. Hierbei kann die Tatsache, dass ein anderer, gemeinsam genutzter Kommunikationskanal 5 zwischen dem Baustein 3 (Sender) und dem Baustein 6 (Empfänger) genutzt wird, für die Steuervorrichtung (Controller) 1 und den Sensor 11 vollständig transparent bleiben.

Bei Ausführungsbeispielen der Erfindung belegen die Kommunikationsdaten von Steuervorrichtung (Controller) 1 und Sensor 11 aus Sicht der Datenübertragung zwischen dem Baustein 3 und dem Baustein 6 nur ein Minimum der Übertragungskapazität. Auch wenn die als "Träger-Kanal" dienende Verbindung 5 nicht exklusiv verwendet wird, läuft die Controller-Sensor-Kommunikation aufgrund der Reduktion der über diesen Kanal zu übertragenden Daten fehlerfrei und ohne unerwünschte zeitlich Verzögerungen ab, und zwar selbst dann, wenn Kommunikationsdaten temporär zwischengespeichert werden, um sie entsprechend dem Protokoll und Übertragungsverfahren des "Träger-Systems", also den Bausteinen 3, 6, korrekt zu übertragen (z. B. Framing, Serialization/Deserialization).

Bei dem Ausführungsbeispiel gemäß Fig. 1 enthalten der als Sender dienende Baustein 3 und der als Empfänger dienende Baustein 6 jeweils den Funktionsblock 4, 7 ("Touch Support"), über den die Steuervorrichtung (Controller) 1 bzw. der Sensor 11 an das bestehende Übertragungssystem zwischen den Bausteinen 3, 6 angeschlossen sind. Die Steuervorrichtung (Controller) 1 kann optional darüber hinaus den Funktionsblock 7 des Bausteins 6 beauftragen, alle Operationen der Phase (1) schrittweise mit dem Sensor 11 auszuführen, liefert dafür alle benötigten Daten und erhält die Antworten des Sensors 11, die der Baustein 6 aufnimmt und zum Baustein 3 überträgt, an der Schnittstelle zum Baustein 3, das heißt über die Verbindung 2. Gegenüber dem Sensor 11 fungiert der Baustein 6 als Kommunikations-Master und tritt als Stellvertreter der Steuervorrichtung (Controller) 1 auf, wobei er sich eines gleichartigen Interfaces bedient.

Während der Phase (2) muss die Steuervorrichtung (Controller) 1 bei diesem und /oder anderen Ausführungsbeispielen den Sensor 11 nicht über die Bausteine 3 und 6 kontaktieren, so dass das Schema der ursprünglichen Kommunikation bestehen bleiben kann. Wenn der Sensor 11 Daten hat, die vom Master, das heißt dem Controller 1, gelesen werden sollen oder müssen, sendet der Funktionsblock 7 eine Aufforderung, beispielsweise in Form einer Unterbrechungsanforderung (Interrupt-Request) nun zum Baustein 6, der daraufhin wie ein Controller die Daten vom Sensor 11 abholt und transparent an den Baustein 3 sendet. Sobald der Funktionsblock 4 den Eingang der Daten im Baustein 3 feststellt, benutzt der Baustein 3 die Sensor-Schnittstelle am Controller 1, das heißt, das Interface zwischen dem Controller 1 und dem Baustein 3 an der Steuervorrichtung (Controller) im Anschlussbereich der Verbindung 2, um dem Controller 1 das Vorhandensein von Daten anzuzeigen. Daraufhin holt nun die Steuervorrichtung (Controller) 1 die Daten in unveränderter Weise, wie bei einer direkten Verbindung mit dem Sensor 11, ab, wobei nun der Baustein 3 die Rolle des Sensors 11 übernimmt.

Wie in Fig. 1 dargestellt ist, dienen einer der oder beide Bausteine 3, 6 zur Übertragung von Nutzdaten, z.B. Video / Audio / Data, zu entsprechenden Quellen, Senken oder Zwischenstufen.

Die Funktionsblöcke Touch Support' 4, 7 - hier beispielhaft dargestellt als Bestandteile eines auf APIX basierten "Trägersystems" - übersetzen zwischen dem logischen und physikalischen Format der Trägersystem-Kommunikation (zwischen den Bausteinen 3 und 6) und der Kommunikation zwischen Host-Controller 1 und Steuervorrichtung 10 des Sensor-Systems.

Aus Sicht der Sensor-Steuervorrichtung 10 agiert der Block 7 als Proxy seines Kommunikation-Endpunkts (Sensor Host Controller). Wenn also der Sensor 11 Daten hat, die von einem Host Controller gelesen und interpretiert werden müssen, dann gelangt z.B. eine Aufforderung an den Block 7 im Baustein 6. Alternativ könnte der Block 7 die Steuereinrichtung 10 des Sensors 11 auch periodisch auf verfügbare Daten testen (polling). Liegen gültige Daten im Sensor 11 vor, holt die Funktion 7 die Daten bei dem Sensor 11 ab und sendet diese an den Funktionsblock 4 im Baustein 3. Umgekehrt, wenn der Block 7 Daten von dem Block 4 erhält, die an die Steuereinrichtung 10 übergeben oder von der Steuereinrichtung 10 gelesen werden müssen, tritt der Block 7 wie ein Host Controller in Aktion, erledigt diese Aufträge und sendet gegebenenfalls Daten als Antwort an den Block 4 zurück.

Block (4) wiederum verhält sich aus Sicht des Host-Controller (1) als Proxy in seiner Kommunikation mit der Sensor-Steuervorrichtung (10).

Diese 'Touch Support' Blöcke 4 und 7 bilden im Sinne des OSI-Layer-Modells einen Layer, der dem Sensor-System ("upper layer") Dienste zur Kommunikation in physikalisch und logisch unverändertem Format anbietet, indem es dafür selbst Dienste des Trägersystems ("lower layer", hier: APIX) in Anspruch nimmt sowie ein für diese Funktion geeignetes Protokoll zwischen seinen eigenen Instanzen (Blöcke 4 und 7) implementiert.

Die Servicedateneinheiten (SDU) der Blöcke 4 und 7, unabhängig davon, ob Steuer- oder Nutzdaten, werden dabei in Protokolldateneinheiten (PDU) des Trägersystems APIX geeignet eingebettet und auf dem bestehenden Link 5 im Multiplex mit den anderen zu transportierenden Daten zwischen Sender- und Empfängerbaustein übertragen. Dadurch entfällt die Notwendigkeit der Verwendung eines weiteren Übertragungssystems, das geeignet ist, Daten über größere Entfernungen zu übertragen und das exklusiv die Daten der Applikationsdomain des Touch Screens (Controller 1, 10 und 11) transportieren würde. Daraus resultieren Einsparungen im technischen Aufwand zur Implementierung der dargestellten Anwendungsszenarien.

Durch dieses "Stellvertreter"-Prinzip (proxy-Prinzip) wird verhindert, dass eine zusätzliche Kommunikation zwischen dem Controller 1 und dem Baustein 6 bzw. zwischen dem Controller 1 und dem Sensor 11, über die Bausteine 3, 6, notwendig ist. Hierdurch kann eine negative Beeinflussung des Zeitverhaltens des integrierten Kommunikationssystems verhindert werden, da andernfalls häufige Anfragen kumulativ große Übertragungskapazitäten belegen würden, wohingegen seltene Anfragen zu größeren Latenzzeiten führen würden.

In der Phase (2) ist das Trägersystem, das aus dem Sender-Baustein 3, dem Empfänger-Baustein 6 und dem dazwischen befindlichen, durch die Leitung 5 gebildeten Übertragungskanal besteht, vollständig transparent. Demgegenüber kann optional der Controller 1 für die Phase (1) je nach Auslegung des Systems seine Kenntnis über die Existenz des Sender-Bausteins 3 nutzen und über den Sender-Baustein 3 die notwendigen Interaktionen zwischen dem Empfänger-Baustein 6 und dem Sensor 11 beauftragen, das heißt entsprechende Befehle generieren und übertragen. Alternativ kann sich der Sender-Baustein 3 bereits in der Phase (1) wie ein Sensor 11 verhalten und ist damit für den Controller 1 transparent.

In Fig. 2 ist ein Ausführungsbeispiel des erfindungsgemäßen Verfahrens näher dargestellt. In einem Schritt S1 wird eine anfängliche Initialisierungsphase durchgeführt, bei der der Controller 1 den Sensor 11 konfiguriert und auf die gewünschte Arbeitsweise einstellt. Der Schritt S1 kann beispielsweise beim Einschalten des die Vorrichtung bemäß Fig. 1 umfassenden Systems oder nach einer Rücksetzung durchgeführt werden.

In einem Schritt S2 erfolgt eine vorzugsweise periodische Abfrage der vom Sensor 11 bereitgestellten Daten durch den Block 7. Alternativ kann der Sensor 11 in dem Schritt S2 den Block 7 periodisch auffordern, vom Sensor 11 abgegebene Daten zu lesen.

In einem Schritt S3, der vor, nach oder gleichzeitig mit dem Schritt S2 durchgeführt werden kann, werden die vom Sensor 11 erzeugten oder an den Sensor 11 anzulegenden Daten über den Funktionsblock 7 zur Verbindungsleitung 8 oder 9 bzw. zum Link 5 geleitet.

In einem Schritt S4, der vor, nach oder gleichzeitig mit dem Schritt S3 durchgeführt werden kann, werden die Daten auf den Verbindungsleitungen 2 und 5 über den Funktionsblock 4 im Sender-Baustein 3 umgesetzt und zur jeweiligen Verbindungsleitung 2 bzw. 5 geleitet.

Bei einem oder mehreren Ausführungsbeispielen wird das in Fig. 1 dargestellte System bei oder in einem Kraftfahrzeug eingesetzt und dient zur Übertragung von Steuer- oder Nutzdaten, z.B. Bilddaten, von einem berührungsempfindlichen Bildschirm, die seitens eines Benutzers eingegeben werden, zu dem Controller 1 bzw. in umgekehrter Richtung von dem Controller 1 zu dem berührungsempfindlichen Bildschirm 11, um auf diesem visuell dargestellt zu werden. Das Ausführungsbeispiel kann hierbei ein Teil eines Kraftfahrzeug-Steuersystems bzw. eines KFZ-Anzeigesystems darstellen.

Es wird auch ein Computerprogramm oder Computerprogrammprodukt bereitgestellt, das Anweisungen enthält, die bei ihrer Ausführung auf einem Computer oder Prozessor diesen zur Durchführung des angegebenen Verfahrens veranlassen.

Die vorstehende Beschreibung von Ausführungsbeispielen ist nicht als beschränkend einzustufen. Alle für den Fachmann erkennbaren Abänderungen, Ergänzungen, Weglassungen liegen gleichfalls im Rahmen der Erfindung, soweit im Schutzumfang der nachfolgenden Patentansprüche enthalten.

## Patentansprüche

1. Vorrichtung zur Kommunikation mit einem Touch-Screen-Sensor (11), welcher mittels einer Sensor-Steuervorrichtung (10) gesteuert wird, wobei die Sensor-Steuervorrichtung (10) über einen entfernt angeordneten Host-Controller (1) steuerbar ist, und mit einem Empfänger-Baustein (6), der über eine Verbindungsleitung (5) mit einem Sender-Baustein (3) verbunden ist, wobei im Empfänger-Baustein (6) ein erster Funktionsblock (7) vorgesehen ist, der Signalisierung und Datenübertragungen zur Kommunikation mit der Sensor-Steuervorrichtung (10) ausführt und zur Kommunikation mit einem zweiten Funktionsblock (4) ausgelegt ist, wobei der Sender-Baustein (3) den zweiten Funktionsblock (4) aufweist, der mit dem Host-Controller (1) verbunden ist, als Sensor-Schnittstelle für den Host-Controller (1) ausgebildet ist und zur Kommunikation mit dem ersten Funktionsblock (7) des Empfänger-Bausteins (6) über die Verbindungsleitung (5) ausgelegt ist,
wobei der erste Funktionsblock (7) des Empfänger-Bausteins (6) als Controller-Schnittstelle für die Sensor-Steuervorrichtung (10) ausgebildet ist, und die Signalisierung zur Kommunikation mit der Sensor-Steuervorrichtung (10) ausführt, so dass über die vorzugsweise als serielle Datenleitung ausgebildete Verbindungsleitung (5) für den Host-Controller (1) lediglich die für ihn erforderlichen Nutzerdaten übertragen werden,
wobei der erste Funktionsblock (7) aus Sicht der Sensor-Steuervorrichtung (10) als Proxy des entfernt angeordneten, einen Kommunikations-Endpunkt bildenden Host-Controllers (1) dient,
wobei die Vorrichtung eingerichtet ist, dann, wenn der Sensor (11) Daten hat, die von dem Host-Controller (1) lesbar und interpretierbar sind, der erste Funktionsblock (7) eingerichtet ist die Daten bei dem Touch-Screen-Sensor (11) abzuholen und diese an den zweiten Funktionsblock (4) im Sender-Baustein (3) zu senden, bzw. umgekehrt, wenn der erste Funktionsblock (7) Daten von dem zweiten Funktionsblock (4) erhält, die an die Sensor-Steuervorrichtung (10) übergebbar oder von der Sensor-Steuervorrichtung (10) lesbar sind, der erste Funktionsblock (7) wie ein Host-Controller in Aktion tritt, eingerichtet ist diese Aufträge zu erledigen und gegebenenfalls Daten als Antwort an den zweiten Funktionsblock (4) zurückzusenden, wobei der zweite Funktionsblock (4) aus Sicht des Host-Controllers (1) eingerichtet ist, sich als Proxy der Sensor-Steuervorrichtung (10) in seiner Kommunikation mit dieser Sensor-Steuervorrichtung (10) zu verhalten.

2. Vorrichtung nach Anspruch 1, die für den Einsatz in einem Kraftfahrzeug ausgelegt ist.

3. Vorrichtung nach einem der vorhergehenden Ansprüche, bei der die Verbindungsleitung (4) als Koaxialkabel oder ein- oder mehradriges Kabel, beispielsweise vieradriges Kabel, ausgebildet ist.

4. Vorrichtung nach einem der vorhergehenden Ansprüche, bei der die Steuervorrichtung (10) und der Empfänger-Baustein (6) über zwei Kommunikationspfade (8, 9) verbunden sind, von denen der eine (8) zur Datenübertragung und der andere (9) zur Signalisierung zwischen der Sensor-Steuervorrichtung (10) und dem Funktionsblock (7) dient.

5. Vorrichtung nach einem der vorhergehenden Ansprüche, die dazu ausgelegt ist, in einer ersten Phase eine Initialisierung zwischen der Sensor-Steuervorrichtung (10) und dem Host-Controller (1) durchzuführen, und in einer zweiten Phase die eigentliche Datenübertragung zwischen dem Sensor (11) und dem Host-Controller (1) auszuführen.

6. System zur Verwendung in einem Kraftfahrzeug für die Anzeigesteuerung mindestens eines im Kraftfahrzeug vorhandenen Displays, mit einer Vorrichtung gemäß einem der vorhergehenden Ansprüche.

7. Verfahren zur Kommunikation mit einem Touch-Screen-Sensor (11), welcher mittels einer Sensor-Steuervorrichtung (10) gesteuert wird, wobei die Sensor-Steuervorrichtung (10) über einen entfernt angeordneten Host-Controller (1) gesteuert wird, und ein Empfänger-Baustein (6), der über eine Kommunikationsleitung (5) mit einem Sender-Baustein (3) verbunden ist, über einen ersten Funktionsblock (7) eine Signalisierung zur Kommunikation mit der Sensor-Steuervorrichtung (10) ausführt, wobei der erste Funktionsblock (7) des Empfänger-Bausteins (6) als Controller-Schnittstelle für die Sensor-Steuervorrichtung (10) ausgebildet ist, und die Signalisierung zur Kommunikation mit der Steuervorrichtung (10) ausführt, so dass über die vorzugsweise als serielle Datenleitung ausgebildete Verbindungsleitung (5) für den Host-Controller (1) lediglich die für ihn erforderlichen Nutzerdaten übertragen werden, wobei der erste Funktionsblock (7) aus Sicht der Sensor-Steuervorrichtung (10) als Proxy des entfernt angeordneten, einen Kommunikations-Endpunkt bildenden Host-Controllers (1) dient, wobei dann, wenn der Sensor (11) Daten hat, die von dem Host-Controller (1) gelesen und interpretiert werden, der erste Funktionsblock (7) die Daten bei dem Sensor (11) abholt und diese an den zweiten Funktionsblock (4) im Sender-Baustein (3) sendet, bzw. umgekehrt, wenn der erste Funktionsblock (7) Daten von dem zweiten Funktionsblock (4) erhält, die an die Steuervorrichtung (10) übergeben oder von der Steuervorrichtung (10) gelesen werden, der erste Funktionsblock (7) wie ein Host Controller in Aktion tritt, diese Aufträge erledigt und gegebenenfalls Daten als Antwort an den zweiten Funktionsblock (4) zurücksendet, wobei sich der zweite Funktionsblock (4) aus Sicht des Controller (1) als Proxy in seiner Kommunikation mit der Sensor-Steuervorrichtung (10) verhält.

8. Verfahren nach Anspruch 7, bei dem dann, wenn der Sensor (11) Daten hat, die von dem Host-Controller (1) gelesen und interpretiert werden sollen, eine Aufforderung an den ersten Funktionsblock (7) im Empfänger-Baustein (6) gesendet wird, oder alternativ der erste Funktionsblock (7) die Steuervorrichtung (10) des Sensors (11) periodisch auf verfügbare Daten testet.

9. Verfahren nach Anspruch 7 oder 8, bei dem in einer ersten Phase eine Initialisierung zwischen der Sensor-Steuervorrichtung (10) und dem Host-Controller (1) durchgeführt wird, und in einer zweiten Phase die eigentliche Datenübertragung zwischen dem Sensor (11) und dem Host-Controller (1) ausgeführt wird.

10. Computerprogramm oder Computerprogrammprodukt, das Anweisungen enthält, die bei ihrer Ausführung auf einer Vorrichtung nach einem der Ansprüche 1-5, diese zur Durchführung des Verfahrens nach einem der Ansprüche 7 bis 9 veranlassen.

## Claims

1. An apparatus for communication with a touch-screen sensor (11) controlled by a sensor control unit (10), wherein the sensor control unit (10) that can be controlled using a remote host controller (1), and with a receiver component (6), which is connected via a connection link (5) with a transmitter component (3),
wherein a first functional block (7) that performs signaling and data transmission to communicate with the sensor control unit (10) is provided in the receiver component (6) and is arranged for communication with a second functional block (4),
wherein the transmitter component (3) comprises the second functional block (4) being connected with the host controller (1) being implemented as sensor interface for the host controller (1) and is arranged for communication with the first functional block (7) of the receiver component (6) via the communication link (5),
wherein the first functional block (7) of the receiver component (6) is arranged as a controller-interface for the sensor control unit (10) and performs the signaling for communication with the sensor control unit (10), such that via the connection link, preferably being implemented as serial data link for the host controller (1) solely the data being required for it are transmitted,
wherein the first functional block (7) serves as a proxy of the remotely arranged host controller (1) forming a communication endpoint from the perspective of the sensor control unit (10), and
wherein when the sensor (11) has data to be read and interpreted by the host controller (1), the first functional block (7) fetches the data from the sensor (11) and transmits them to a second functional block (4) in the transmitter component (3), respectively the other way round the first functional block (7) in case the first functional block (7) receives data from the second functional block (4) to be handed over to the sensor control unit (10) or to be read by the sensor control unit (10) performs like a host controller (1), accomplishes these tasks and sends the data back to the second functional block (4) as a reply, wherein the second functional block (4) performs from the perspective of the host controller (1) like a proxy in its communication with the sensor control unit (10).

2. The apparatus according to claim 1, being implemented for usage in a motor vehicle.

3. The apparatus according to any one of the preceding claims, wherein the communication link is formed as a coaxial cable, a single-wired or a multi-core cable, for instance a four-core cable.

4. The apparatus according to any one of the preceding claims, wherein the sensor control unit (10) and the receiver component (6) are connected via two communication paths (8, 9), one of which serves for data transmission and the other (9) serves for signaling between the sensor control unit (10) and the functional block (7).

5. The apparatus according to any one of the preceding claims, being implemented for performing in a first phase an initialization between the sensor control unit (10) and the host controller (1), and in a second phase accomplishing the data transmission as such between the sensor (11) and the host controller (1).

6. A system for usage in a motor vehicle for display controlling of at least one display being present in a motor vehicle, comprising an apparatus according to any one of the preceding claims.

7. A method for communication with a touch-screen sensor (11) controlled by a sensor control unit (10), wherein the sensor control unit (10) is controlled via a remotely arranged host controller (1), and a receiver component (6), being connected with the transmitter component (3) via a communication link (5), performs signaling via a first functional block (7) for communication with the sensor control unit (10),
wherein the first functional block (7) of the receiver component (6) is arranged as a controller-interface for the sensor control unit (10) and performs the signaling for communication with the sensor control unit (10), such that via the connection link (5), preferably being implemented as serial data link for the host controller (1) solely the data being required for it are transmitted, wherein the first functional block (7) serves as a proxy of the remotely arranged host controller (1) forming a communication endpoint from the perspective of the sensor control unit (10),
wherein when the sensor (11) has data to be read and interpreted by the host controller (1), the first functional block (7) fetches the data from the sensor (11) and transmits them to a second functional block (4) in the transmitter component (3), respectively the other way round the first functional block (7) in case the first functional block (7) receives data from the second functional block (4) to be handed over to the sensor control unit (10) or to be read by the sensor control unit (10) performs like a host controller (1), accomplishes these tasks and sends the data back to the second functional block (4) as a reply, and
wherein the second functional block (4) performs from the perspective of the host controller (1) like a proxy in its communication with the sensor control unit (10).

8. The method according to claim 7, wherein a query is transmitted to the first functional block (7) in the receiver component (6) in case the sensor (11) has data to be read and interpreted by the host controller (1), or alternatively, the first functional block (7) tests the sensor control unit (10) of the sensor (11) periodically regarding available data.

9. The method according to claim 7 or 8, wherein in a first phase an initializing between the sensor control unit (10) and the host controller (1) is performed and in a second phase the data transmission as such is performed between the sensor (11) and the host controller (1).

10. A computer program or a computer program product, comprising instructions which, when executed on a computer or a processor, implement the accomplishment of the method according to any one of claims 7 to 9.

## Revendications

1. Dispositif de communication comportant un capteur d'écran tactile (11) qui est commandé à l'aide d'un moyen de commande de capteur (10), dans lequel le moyen de commande de capteur (10) est commandable par le biais d'un contrôleur hôte (1) disposé à distance, et comprenant un module récepteur (6), qui est relié à un module émetteur (3) par le biais d'une ligne de liaison (5), dans lequel il est prévu dans le module récepteur (6) un premier bloc fonctionnel (7) qui exécute une signalisation et des transmissions de données pour communiquer avec le moyen de commande de capteur (10) et est configuré pour communiquer avec un second bloc fonctionnel (4), dans lequel le module émetteur (3) présente le second bloc fonctionnel (4) qui est relié au contrôleur hôte (1), est conçu sous la forme d'une interface de capteur pour le contrôleur hôte (1) et est configuré pour communiquer avec le premier bloc fonctionnel (7) du module récepteur (6) par le biais de la ligne de liaison (5), dans lequel le premier bloc fonctionnel (7) du module récepteur (6) est conçu sous la forme d'une interface de contrôleur pour le moyen de commande de capteur (10), et exécute la signalisation pour communiquer avec le moyen de commande de capteur (10) de telle sorte que, par le biais de la ligne de liaison (5) conçue de préférence sous la forme d'une ligne de données en série pour le contrôleur hôte (1), seules les données d'utilisateur requises par celui-ci sont transmises,
dans lequel le premier bloc fonctionnel (7) sert de proxy du contrôleur hôte (1) disposé à distance et formant un terminal de communication dans la perspective du moyen de commande de capteur (10),
dans lequel le dispositif est adapté, ensuite, lorsque le capteur (11) a des données qui sont lisibles et interprétables par le contrôleur hôte (1), le premier bloc fonctionnel (7) est adapté pour récupérer les données par le capteur d'écran tactile (11) et envoyer celles-ci au second bloc fonctionnel (4) dans le module émetteur (3), respectivement inversement, lorsque le premier bloc fonctionnel (7) reçoit des données du second bloc fonctionnel (4), qui sont transférables sur le moyen de commande de capteur (10) ou lisibles par le moyen de commande de capteur (10), le premier bloc fonctionnel (7) entre en action comme un contrôleur hôte, est adapté pour exécuter ces commandes et le cas échéant renvoyer des données en tant que réponses au second bloc fonctionnel (4), dans lequel le second bloc fonctionnel (4) est adapté (1) pour se comporter en tant proxy du moyen de commande de capteur (10) dans sa communication avec ce moyen de commande de capteur (10) dans la perspective du contrôleur hôte.

2. Dispositif selon la revendication 1, qui est configuré pour une utilisation dans un véhicule automobile.

3. Dispositif selon une des revendications précédentes, dans lequel la ligne de liaison (4) est conçue sous la forme d'un câble coaxial ou d'un câble monoconducteur ou multiconducteur, par exemple un câble à quatre conducteurs.

4. Dispositif selon une des revendications précédentes, dans lequel le moyen de commande (10) et le module récepteur (6) sont reliés par le biais de deux chemins de communication (8, 9), dont l'un (8) sert à la transmission de données et l'autre (9) à la signalisation entre le moyen de commande de capteur (10) et le bloc fonctionnel (7).

5. Dispositif selon une des revendications précédentes, qui est adapté, dans une première phase, pour réaliser une initialisation entre le moyen de commande de capteur (10) et le contrôleur hôte (1) et, dans une seconde phase, pour exécuter la transmission de données proprement dite entre le capteur (11) et le contrôleur hôte (1).

6. Système destiné à une utilisation dans un véhicule automobile pour la commande d'affichage d'au moins un afficheur présent dans le véhicule automobile, comportant un dispositif selon une des revendications précédentes.

7. Procédé de communication comportant un capteur d'écran tactile (11), qui est commandé à l'aide d'un moyen de commande de capteur (10), dans lequel le moyen de commande de capteur (10) est commandé par le biais d'un contrôleur hôte (1) disposé à distance, et un module récepteur (6), qui est relié à un module émetteur (3) par le biais d'une ligne de communication (5), exécute par le biais d'un premier bloc fonctionnel (7) une signalisation pour communiquer avec le moyen de commande de capteur (10), dans lequel le premier bloc fonctionnel (7) du module récepteur (6) est conçu sous la forme d'une interface de contrôleur pour le moyen de commande de capteur (10), et exécute la signalisation pour communiquer avec le moyen de commande (10), de telle sorte que, par le biais de la ligne de liaison (5) conçue de préférence sous la forme d'une ligne de données en série pour le contrôleur hôte (1), seules les données d'utilisateur qui sont requises par celui-ci sont transmises, dans lequel le premier bloc fonctionnel (7) sert de proxy du contrôleur hôte (1) disposé à distance et formant un terminal de communication dans la perspective du moyen de commande de capteur (10), dans lequel ensuite, lorsque le capteur (11) a des données qui sont lues et interprétées par le contrôleur hôte (1), le premier bloc fonctionnel (7) récupère les données par le biais du capteur (11) et envoie celles-ci au second bloc fonctionnel (4) dans le module émetteur (3), respectivement inversement, lorsque le premier bloc fonctionnel (7) reçoit des données du second bloc fonctionnel (4), qui sont transférées sur le moyen de commande de capteur (10) ou lues par le moyen de commande (10), le premier bloc fonctionnel (7) entre en action comme un contrôleur hôte, exécute ces commandes et le cas échéant renvoie des données en tant que réponses au second bloc fonctionnel (4), dans lequel le second bloc fonctionnel (4) se comporte en tant proxy dans sa communication avec le moyen de commande de capteur (10) dans la perspective du contrôleur (1).

8. Procédé selon la revendication 7, dans lequel ensuite, lorsque le capteur (11) a des données qui doivent être lues et interprétées par le contrôleur hôte (1), une invitation est envoyée au premier bloc fonctionnel (7) dans le module récepteur (6), ou en variante le premier bloc fonctionnel (7) teste le moyen de commande (10) du capteur (11) de manière périodique pour connaître les données disponibles.

9. Procédé selon la revendication 7 ou 8, dans lequel, dans une première phase, une initialisation est réalisée entre le moyen de commande de capteur (10) et le contrôleur hôte (1), et dans une seconde phase la transmission de données proprement dite est exécutée entre le capteur (11) et le contrôleur hôte (1).

10. Programme d'ordinateur ou produit de programme d'ordinateur, qui contient des instructions qui, lorsqu'elles sont exécutées sur un dispositif selon une des revendications 1 à 5, sont amenées à mettre en oeuvre le procédé selon une des revendications 7 à 9.
